# EUROPEAN PATENT APPLICATION

(11) **EP 3 537 189 A1**
(43) Date of publication of application: **11.09.2019**
(21) Application number: 18160943.9
(22) Date of filing: 09.03.2018
(51) Int. Cl.: G02B 5/20, G06F 21/32, G06K 9/00, C01B 32/158

(54) **COLLIMATOR FILTER**

(71) Applicant: Nederlandse Organisatie voor toegepast- natuurwetenschappelijk onderzoek TNO, 2595 DA 's-Gravenhage (NL)
(72) Inventor: Tordera Salvador, Daniel, 2595 DA 's-Gravenhage (NL); Gelinck, Gerwin Hermanus, 2595 DA 's-Gravenhage (NL); Unnikrishnan, Sandeep, 2595 DA 's-Gravenhage (NL); Akkerman, Hylke Broer, 2595 DA 's-Gravenhage (NL); Peeters, Bart, 2595 DA 's-Gravenhage (NL); van Breemen, Albert Jos Jan Marie, 2595 DA 's-Gravenhage (NL)
(74) Representative: V.O.

(57) **Abstract**

A collimator filter (10) comprises an entry surface (11) to receive incident light (Li,Li') at different angles of incidence (θi,θi') and an exit surface (12) to allow output light (Lo) to exit from the collimator filter (10). A filter structure between the entry surface (11) and the exit surface (12) transmits only parts of the incident light (Li) having angles of incidence (θi) below a threshold angle (θmax). The filter structure comprises a patterned array of carbon nanotubes (1), wherein the nanotubes (1) are aligned extending in a principal transmission direction (Z) between the entry surface (11) and the exit surface (12). The nanotubes (1) are arranged to form a two dimensional pattern (P) transverse to the principal transmission direction (Z). Open areas of the pattern (P) without nanotubes (1) form micro-apertures (A) between the nanotubes (1) for transmitting the output light (Lo) through the filter structure.

## Description

### TECHNICAL FIELD AND BACKGROUND

The present disclosure relates to a collimator filter and method of manufacturing the collimator filter.

For various applications, such as mobile phone unlocking and payment, a fingerprint scanner can be used to make sure that the registered user is authorized, and not an imposter. There is an interest in integrating a high resolution fingerprint scanner inside the display area, so the home button can be removed or left out on the top side of the mobile device and so-called full-face display is realized. However, in a display application many coatings, films and cover glass may effectively increase the distance between the photodetector and the finger. Without glass cover the light reflected from the finger may show detailed features of valley and ridges. These features may be deteriorated, e.g. blurred, when the cover glass is added, even after signal processing, effectively decreasing the resolution of the fingerprint image.

US 9,829,614 B2 describes systems and methods for optical imaging in a fingerprint sensor. The optical fingerprint sensor includes an image sensor array; a collimator filter layer disposed above the image sensor array, the collimator filter layer having an array of apertures; and an illumination layer disposed above the collimator filter layer. The collimator filter layer filters reflected light such that only certain of the reflected light beams reach optical sensing elements in the image sensor array. Employing the collimator filter layer prevents blurring while allowing for a lower-profile image sensor.

There is yet a need to provide an improved collimator filter and method of manufacturing.

### SUMMARY

Aspects of the present disclosure provide a collimator filter and method of manufacturing. In the collimator filter, an entry surface may receive incident light at different angles of incidence. An exit surface may allow output light to exit from the collimator filter. A filter structure between the entry surface and the exit surface preferably transmits at least part of the incident light having angles of incidence below a threshold angle with respect to the principal transmission direction as the output light, and blocks the incident light having angles of incidence above the threshold angle from passing the filter structure. As described herein, the filter structure may comprise a patterned array of nanotubes, extending in the principal transmission direction between the entry surface and the exit surface. The nanotubes are preferably arranged to form a two dimensional pattern transverse to the principal transmission direction. Open areas of the pattern without nanotubes may thus form micro-apertures between the nanotubes for selectively transmitting the output light through the filter structure.

The inventors find that carbon nanotubes can be particularly suitable for the purpose of building a collimator filter. Without being bound by theory, it is found that the nanotubes can be used to accurately and reproducibly manufacture microscopic features, in particular micro-apertures having a small aspect ratio of the aperture diameter to the aperture length for collimation, while still keeping the length very small to provide a very thin collimator filter, and while essentially absorbing all the non-collimated light which hits the walls of the aperture at higher angles of incidence, so this light is not inadvertently reflected through the aperture.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A illustrates a schematic side view depicting nanotubes;
FIG 1B illustrates a schematic top view of an embodiment for an array of carbon nanotubes;
FIG 1C illustrates a schematic perspective view of an embodiment for a collimator filter;
FIG 2 illustrates a schematic cross-section view of an embodiment for a collimator filter;
FIG 3A and 3B illustrate schematic cross-sections of embodiments for a display device with a collimator filter;
FIGs 4A-D illustrate images of example filter structures;
FIGs 5A and 5B illustrate the effect of measuring a finger print without and with cover glass;
FIG 5C illustrates comparison graphs of measurements in different situations.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

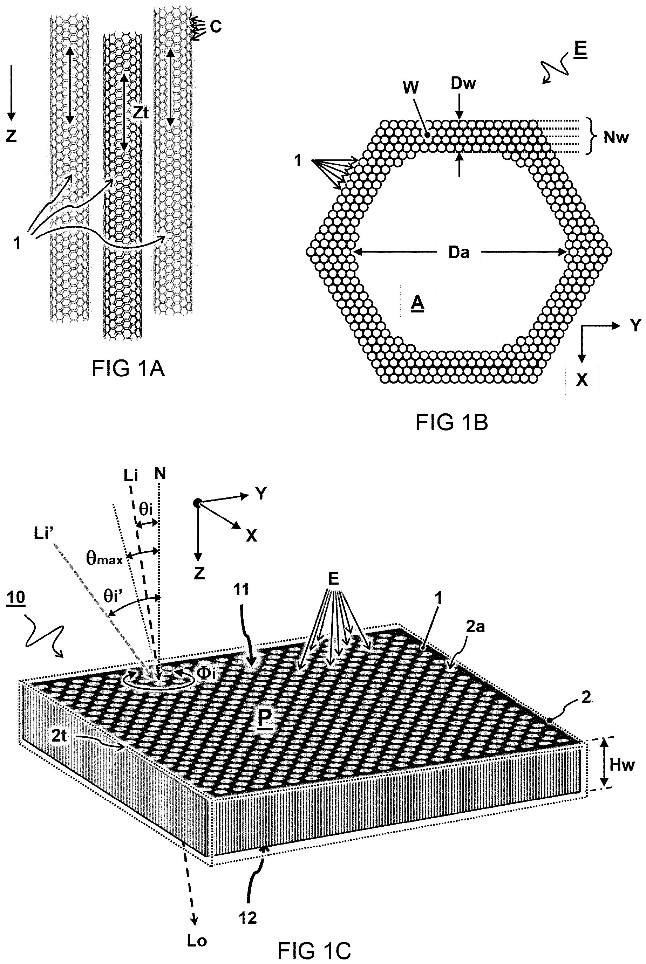

FIG 1A illustrates a schematic side view depicting a number of nanotubes 1. Typically, the nanotubes 1 are formed by cylindrical nanostructures, e.g. having relatively small diameters up to hundred nanometer and relatively high lengths on the order of ten, hundred or even thousand micrometer (one or more millimeter). Preferably the nanostructures essentially consist of carbon atoms (indicated by "C"). In this way carbon nanotubes (CNTs) may be formed. While CNTs are highly preferred e.g. in view of their optical and structural properties as well as their manufacturability, in principle the present teachings may also be applicable to other materials forming nanotubes. While the figure shows single-walled nanotubes (SWNTs) also multi-walled nanotubes (MWNTs) can be envisaged. Generally, the individual nanotubes may align themselves e.g. they can be held together by van der Waals forces and/or pi-stacking. In a preferred embodiment, as shown, the nanotubes 1 are predominantly aligned with their length or tube direction "Zt" along a principal direction. Most preferably, the principal alignment direction of the nanotubes coincides with the principal transmission direction "Z" of the collimator filter 10.

FIG 1B illustrates a schematic top view of an embodiment for an array of carbon nanotubes 1. In some embodiments, the nanotubes 1 are bunched together, e.g. side-to-side, to form larger structures such as walls "W". For example, walls "W" of many nanotubes 1 can be arranged to define microscopic sized compartments apertures ("A"). The walls "W" may have a thickness "Dw" which is typically determined by multiple layers (Nw) or rows of nanotubes 1 aligned together. Using thicker walls or more layers of nanotubes 1 may improve structural integrity and/or alignment of the walls "W". Typically, the number of nanotube layers "Nw" forming the walls "W" is at least three, five, ten, twenty, or more.

In some embodiments, the nanotubes 1 are arranged in walls "W" to form a pattern of cells "E". For example, each cell E may enclose a respective micro-aperture "A" between its walls "W" surrounding the aperture. For example, FIG 1B shows an embodiment of a single cell E which can be repeated with adjacent cells of the same or different shape. Preferably, the walls "W" are arranged in a pattern "P" to form a plurality of interconnected cells "E" e.g. sharing the common walls there between. In a preferred embodiment, the pattern is formed of repeated unit cells, each having substantially or essentially the same form and/or size. For example, FIG 1C shows a pattern "P" of repeated cells "E".

In one embodiment, as shown e.g. in FIG 1B, the cell E, may have a generally hexagonal shape. Such shape may be preferred e.g. because the shape can be repeated with an efficient packing factor to cover a surface of the filter. Alternatively, or in addition, also other shapes such as triangular or square shaped cells can be envisaged (not shown). Alternatively, or in addition, also other shapes and patterns can be envisaged, comprising all identical cells or patterns with cells selected from two or more repeating shapes, or generally different cells, or other structures with walls forming micro-apertures. Preferably, the cells have at least a three fold rotation symmetry, e.g. compared to an elongate rectangular cell which may have different lengths in different transverse directions possibly causing anisotropic collimation (e.g. more collimated in X than Y).

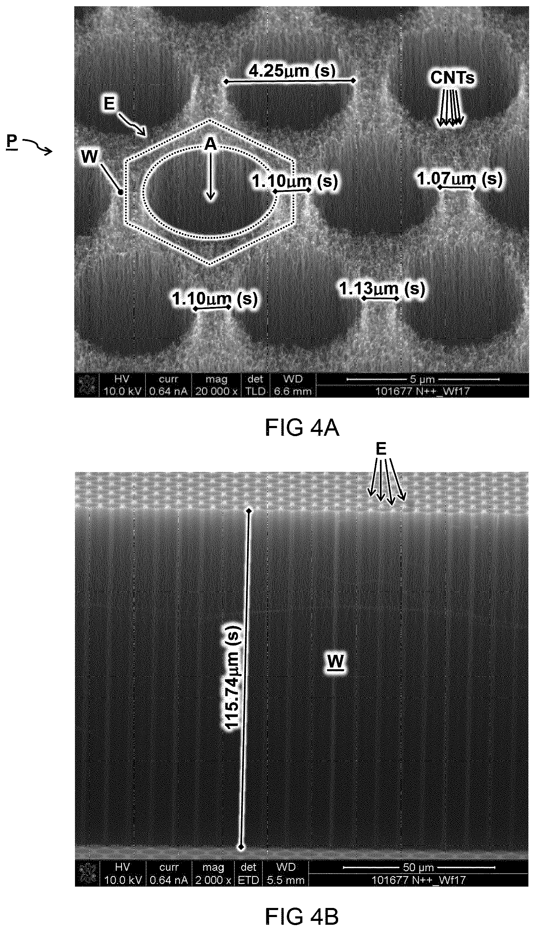

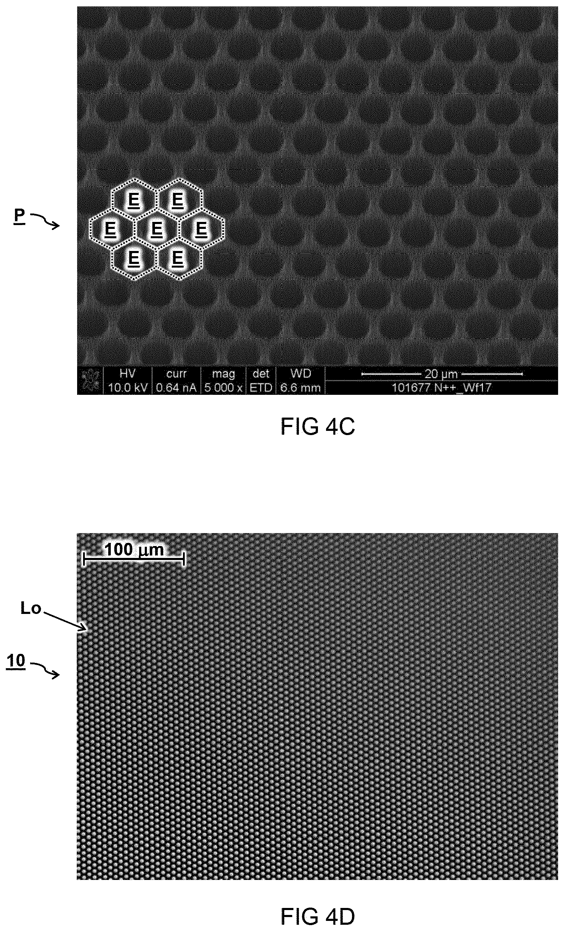

In some embodiments, the micro-apertures "A" formed inside respective cells "E" are rounded or circular. In other words the inner diameter "Da" of the micro-apertures "A" may be substantially constant, e.g. within 20%, within 10%, within 5%, or less, e.g. essentially constant as in a substantially circular aperture. This may provide a further improvement in isotropic collimation properties. For example, the (polar) threshold angle θmax is preferably constant or has minimal dependence on the azimuth angle Φi at which the light is incident, as indicated in FIG 1C. For example, a preferred pattern "P", as particularly visible in FIGs 4A and 4C, comprises CNTS according to a hexagonal arrangement of repeated cells "E", wherein the micro-apertures "A" formed inside the walls "W" of the cells "E" are circular or rounded. While the circular inside most efficiently fits the unit cells in a hexagonal pattern, in principle, the rounded inside can also be provided in other arrangements, e.g. squares or triangles but at the cost of thicker walls at the corners.

FIG 1C illustrates a schematic perspective view of a preferred embodiment for a collimator filter 10. In the embodiment shown, the collimator filter 10 comprises an entry surface 11 for receiving incident light (Li and Li') at different angles of incidence (θi and θi', respectively) with respect to a principal transmission direction "Z" of the collimator filter 10. An exit surface 12 (indicated but not visible in this view) may be disposed at an opposite side of the collimator filter 10 with respect to the entry surface 11 for allowing output light Lo to exit from the collimator filter 10. A filter structure may be disposed between the entry surface 11 and the exit surface 12 for transmitting at least part of the incident light Li having angles of incidence θi below a threshold angle θmax with respect to the principal transmission direction "Z" as the output light Lo, and blocking substantially all parts (e.g. >99%) of the incident light Li' having angles of incidence θi' above the threshold angle θmax from passing the filter structure.

As described herein, the filter structure comprises a patterned array of nanotubes 1 such as CNTs. Preferably, the nanotubes 1 are aligned with their tube lengths "Zt" essentially or predominantly extending in the principal transmission direction "Z" between the entry surface 11 and the exit surface 12. Preferably, the nanotubes 1 are arranged with their diameters side-by-side to form a two dimensional pattern "P" transverse to the principal transmission direction "Z". In a preferred embodiment, open areas of the pattern "P" i.e. open volumes or tubes through the filter structure without nanotubes 1 form micro-apertures "A" between the nanotubes 1 for the transmitting of the output light Lo through the filter structure.

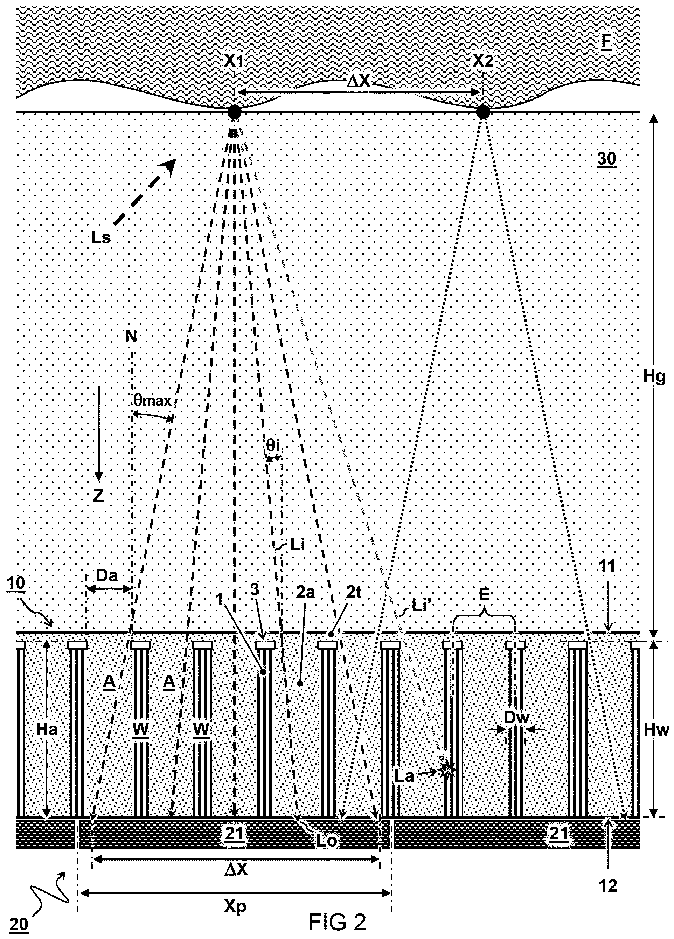

In a preferred embodiment, the filter structure may be encased in a transparent matrix 2, as indicated by the dotted lines in FIG 1C and further shown in the cross-section view of FIG 2. For example, the matrix encasing the nanotubes may form a solid block or sheet of material. Advantageously, the transparent matrix 2 may essentially fixate the nanotubes 1 and/or protect them from environmental influence. The fixation may also help to optionally remove the collimator filter from a substrate (not shown) e.g. after manufacturing.

Preferably, the transparent matrix 2 essentially consists of an optically transparent material, at least in a range of wavelengths at which the filter is to be used. For example, the transparent matrix 2 is transparent to a range or at least a subrange of visible wavelengths (e.g. 400 - 700 nm) and/or infrared wavelengths (e.g. 700 nm-1 mm). For some applications, the transparent matrix 2 may additionally or alternatively allow at least some UV light (below 400 nm) to pass through. For example, the transparent matrix 2 transmits more than fifty percent of such light, preferably more than eighty percent, more preferably more than ninety percent, or even substantially all the light, e.g. between ninety-five to hundred percent.

Preferably, the transparent matrix 2 has minimal scattering properties to transmit collimated light through the micro-apertures "A" without being scattered e.g. into the nanotube walls "W" and/or prevent non-collimated light to inadvertently pass the micro-apertures "A" by coincidentally scattering in the principal transmission direction "Z". For example, the transparent matrix 2 scatters less than thirty percent of the passing light, preferably less than ten percent, or less, most preferably, essentially none of the light will be scattered by the transparent matrix 2, e.g. zero to five percent

In some embodiments, it may be preferred to use a flexible or elastic material to form the transparent matrix 2. Allowing the material to bend without breaking may improve robustness. It can also help to remove, e.g. peel, the filter from a substrate after encasing. In some embodiments, the filter e.g. foil may be considered flexible if it has a relatively low flexural rigidity, e.g. less than 500 Pa·m³, less than 100 Pa·m³, or even less than 10 Pa·m³. In other or further embodiments, the filter may be considered flexible if it can be rolled or bent over a radius of curvature less than ten centimeters, or less than five centimeter, or less, without the filter losing essential optical functionality.

In one embodiment, the transparent matrix 2 comprises a polymeric organosilicon compounds. For example, polydimethylsiloxane (PDMS) has various advantageous properties for the current purposes. Also other, e.g. similar, materials can be used as the (optional) transparent matrix. In some embodiments, the transparent matrix 2 is formed from a liquid precursor which is solidified after application.

In some embodiments, e.g. as shown in FIG 2, it is preferred that the micro-apertures "A" are at least partially filled by material 2a of the transparent matrix 2. In other or further embodiments, the transparent matrix 2 may form a cover layer 2t to cover at least part of the entry surface 11 and/or exit surface 12. In one embodiment, the transparent matrix 2 is manufactured (or afterwards grinded, polished, or lapped) to form an optically flat entry surface 11 and/or exit surface 12. Especially, the optical entry surface 11 may be relatively smooth to prevent or minimize scattering of the incident light Li. For example, the surface or surfaces are optically flat with surface deviations less than one micrometer, less than five hundred nanometer, less than three hundred nanometer, less than hundred nanometer, less than fifty nanometer, or less, depending on the application. Preferably, the size of the surface deviations is at least lower than the aperture diameter or size "Da". Alternatively, or in addition to the transparent cover layer 2t having a thickness on top of the nanotubes 1, the cover layer may be omitted or the thickness of the cover layer can be reduced to a minimum, e.g. less than hundred nanometers, less than fifty nanometer, or even less than ten nanometer. For example, the nanotubes may reach all the way to the end of the transparent matrix (not shown here).

As illustrated e.g. in FIG 2, a collimator filter can be used for filtering a stream of rays, e.g. light, so that only those rays traveling parallel or nearly parallel to a specified direction are allowed through. For example, this can be advantageous for applications such as but not limited to increase the resolution of an image on top of the collimator detected by a detector on bottom of the collimator. The main direction in which the rays are allowed through is referred herein as the principal transmission direction of the filter. The collimator filter 10 may selectively transmit light there through depending on an angle of incidence θi of the incident light Li with respect to the principal transmission direction "Z". In a preferred embodiment, as shown, the principal transmission direction "Z" is aligned with a normal vector N of the entry surface 11. This means only light Li at normal or near-normal angle of incidence θ is transmitted through the collimator filter 10 while light at higher angles is blocked. For example, the collimator filter 10 may transmit only light at angles of incidence less than ten degrees (plane angle), less than five degrees, less than two degrees, or even less than one degree with respect to the principal transmission direction "Z". The smaller the threshold angle θmax, the better the light is collimated (however this may be at the cost of blocking more non-collimated light).

Light Li' at higher angles of incidence is preferably absorbed by the nanotubes 1 e.g. inside the micro-apertures "A". In a preferred embodiment, the walls "W" of nanotubes have a high light absorption "La", at least inside the micro-apertures "A", e.g. absorbing more than 90% of the (used) light falling onto the walls, preferably more than 99%. For example, CNTs may absorb >99.9% of the light. For example, the light Ls illuminating an object "F" may originate from a light source (not shown here) inside a device such as a fingerprint detector using the collimator filter 10. For example, visible or infrared light may be used. By absorbing most or all of the light, it can be prevented that non-collimated light Li' hitting the walls "W" of nanotubes can still pass the aperture e.g. by reflection.

It will be appreciated that the micro-apertures "A" can be dimensioned to define the threshold angle θmax. For example, the micro-apertures "A" have a (maximum or average) aperture diameter "Da" transverse to the principal transmission direction "Z" and a (minimum or average) aperture length Ha along the principal transmission direction "Z". For example, the threshold angle θmax may be defined as the inverse tangent function (tan⁻¹) of the aperture diameter "Da" divided by the aperture length or height "Ha", i.e. tan(θmax) = Da/Ha. For example, a threshold angle θmax of less than ten degrees may be achieved with an aspect ratio of Da/Ha<0.17, i.e. tan(10) or less than about 1:5. For example, a threshold angle θmax of less than five degrees may be achieved with an aspect ratio of Da/Ha<0.087, i.e. tan(5) or less than about 1:10. For example, a threshold angle θmax of less than one degree may be achieved with an aspect ratio of Da/Ha<0.017, i.e. tan(1) or less than about 1:50. The lower the aspect ratio Da/Ha, the more collimated the filtered light. For example, the micro-apertures "A" may have a cross-section diameter "Da" between 0.1 - 20 µm, preferably between one and ten micrometer. At the same time, the micro-apertures "A" may e.g. have a length or height "Ha" of at least ten micrometer, preferably at least fifty or at least hundred micrometer, or more, e.g. up to one or even several millimeters.

In a preferred embodiment, the nanotubes 1 are bunched together to form a pattern of interconnected walls "W", wherein the micro-apertures "A" are each surrounded by respective parts of the walls "W". In some embodiments, the aperture diameter "Da" is defined by the (maximum) distance between microstructures formed by the pattern of nanotubes 1, e.g. the gap between the walls "W". For example, the aperture length Ha may be the same as the height "Hw" of the walls "W", or the length of the nanotubes 1 in the principal transmission direction "Z". For example, the walls "W" in FIG 4B have a height of more than hundred micrometer.

In some embodiments, the walls "W" have a thickness "Dw" on the order of one micrometer, e.g. between hundred nanometer up to ten micrometer, preferably between half a micrometer and two, or five micrometer. For example, a single nanotube may have an (effective) diameter between ten and hundred nanometer, typically between twenty and fifty nanometer. For example, around twenty layers of nanotubes with respective diameters around fifty nanometers may form an average wall thickness of about one micrometer. Of course also other sizes can be used.

In a preferred embodiment, the wall thickness "Dw" is less than the aperture diameter "Da", by at least a factor one (i.e. at least the same size), preferably at least a factor two (i.e. the diameter is twice the wall thickness), more preferably at least a factor three, four, ten, twenty, or more. For example, as shown in FIG 4A, the wall thickness is about one micrometer and the wall diameter four micrometer. Also other sizes are possible. The larger the aperture diameter "Da" relative to the wall thickness "Dw", the more of the (collimated) light may fall onto the micro-apertures "A" instead of a top of the walls. Preferably, a total surface area of the filter covered by the micro-apertures "A" is as large as possible, e.g. relative to the area covered by the nanotubes 1, while maintaining a structural integrity of the walls. For example, the micro-apertures "A" may cover at least thirty percent of the area, at least forty percent, at least fifty percent, at least sixty percent, or more. The more of the filter area covered by micro-apertures "A", the more potential (collimated) light transmission.

In some embodiments, as illustrated in FIG 2, a top of the walls "W" is covered by a reflective layer 3 (while leaving the apertures open). This may improve light efficiency, e.g. light hitting the top of the wall is reflected back up so it can be re-used to illuminate another part of an object to be imaged such as a finger or other object "F" on top of a (transparent) cover 30. For example, the reflective top coat is applied by metal sputtering on top of the walls "W'.

Aspects of the present disclosure may also relate to an image detector. For example, as shown in FIG 2, a photodetector 20 may comprise an array of light sensitive detector pixels 21 for detecting light Lo to form an image of a nearby object "F". Optionally, the image detector has a transparent cover plate 30, here indicated with a thickness "Hg". As explained before, the (minimum) distance "Hg" may deteriorate the imaging of the object. To alleviate this, the image detector may incorporate the collimator filter 10 as described herein. For example, as shown, the collimator filter 10 is disposed between the transparent cover plate 30 and the photodetector 20 for only passing part of the incident light Li from the object "F" which is received at or near a normal direction "N" of the entry surface 11 of the collimator filter 10 to improve image resolution of the imaged object "F" on the detector pixels 21 (indicated by the maximum allowed spread ΔX. Preferably, the collimator filter 10 is as close as possible to the detector pixels 21, e.g. in contact. Optionally (not shown here), there can also be a (preferably thin) transparent cover layer between the detector pixels 21 and the collimator filter 10.

Preferably, the collimator filter 10 is disposed as close as possible to the detector pixels 21, e.g. within one millimeter, within hundred micrometer, within ten micrometer, within one micrometer, or less, e.g. contacting the pixels. Preferably, the pitch or periodicity of the cells "E" is less than or equal to the pixel size "Xp" of the detector pixels 21. Because the thickness of the collimator filter may also contribute to the distance between the object and the pixels, it will be appreciated that reducing the thickness of collimator filter 10 may provide better performance. So if the thickness of the filter is to be reduced, this means the height "Hw" of the walls "W" is to be reduced, and the diameter may be reduced accordingly to maintain a certain threshold angle θmax. So it can be preferable in some embodiments that each of the detector pixels 21 is covered by a plurality of micro-apertures "A". For example, the detector pixels 21 may have a size of fifty micrometer and the corresponding cells "E" have a pitch of five micrometer so that about ten cells fit side to side on a pixel or about hundred to cover a square pixel. Of course also other relative measures can be envisaged.

In the embodiment shown, the object "F" to be imaged is close to or pressed against the transparent cover plate 30. For example, the image detector comprises a light source, e.g. backlight (not shown here) to illuminate the object "F" with source light Ls from a side of the transparent cover plate 30. Particular applications of the present disclosure may e.g. relate to a fingerprint detector comprising the image detector as described wherein the object "F" is a finger pressed against the transparent cover plate 30. Optionally, the fingerprint detector may comprise image processing circuitry (not shown) to receive an image of a fingerprint of the finger from the image detector and process the image to recognize the fingerprint, e.g. by comparing to a predetermined reference fingerprint. Instead of fingerprint detection, also other (high resolution) imaging can be envisaged.

In some embodiments, the transparent cover plate 30 as shown may be absent or substituted for a stack of different layers (not shown), e.g. from top to bottom including but not limited to one or more of a protective device cover (e.g. -200 µm thick), possible cover glass (e.g. -0.6 mm thick), a touch panel (e.g. -150 µm thick), a polarizer (e.g. -150 µm thick). This may reach a total thickness of about 1 mm, which can deteriorate e.g. the quality of a detected fingerprint which may be alleviated using the collimator filter 10.

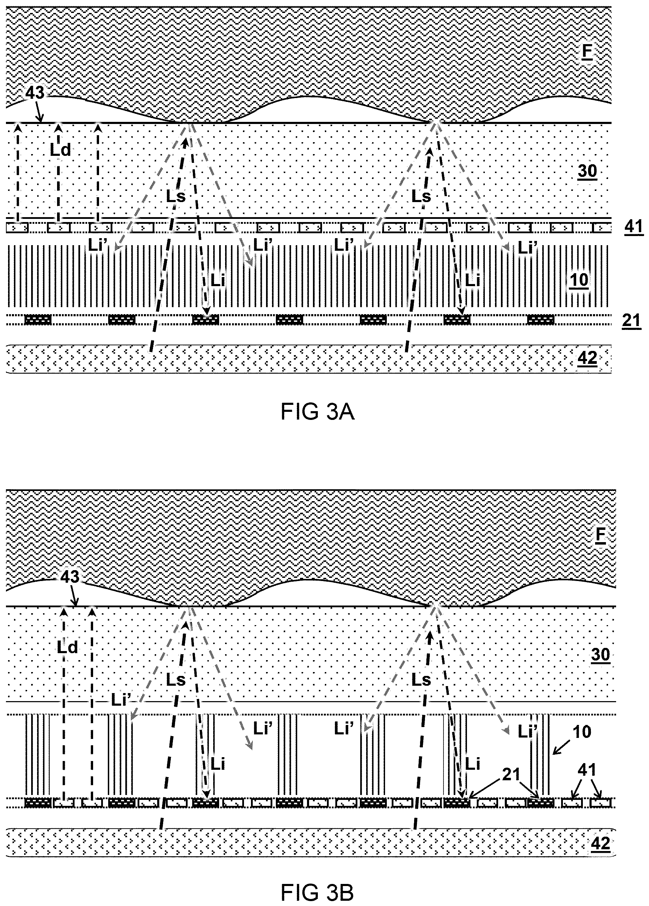

Alternative or further aspects of the present disclosure may also find application in a display device comprising a fingerprint or other image detector as described. For example, FIGs 3A and 3B illustrate possible embodiments for a display device with a display screen 43 configured for both displaying an image and detecting or imaging an object such as a finger pressed against or in the vicinity of the display screen 43. Typically, the display screen comprises display pixels 41 to emit light Ld for displaying the image on the display screen 43, e.g. through the transparent cover plate 30.

In one embodiment, as illustrated in FIG 3A, the display pixels 41 are disposed in front of the collimator filter 10, i.e. between the collimator filter 10 and (a view side of) the display screen 43. For example, the display pixels 41 may be sparsely distributed passing at least some of the incident light Li,Li' from the object there through. In some embodiments, an extended collimator filter 10 may be used to cover the detector pixels 21 below for allowing only the collimated light Li through while blocking the non-collimated light Li'.

In another or further embodiment, as illustrated in FIG 3B, the display pixels 41 may be disposed partly of fully in line between the detector pixels 21. For example, the display and detector pixels can be part of the same matrix or two matrices can be partly overlapped. In a further preferred embodiment, as illustrated, the collimating parts of the collimator filter 10 may be localized to exclusively cover the detector pixels 21. For example, the collimator filter 10 may be locally grown only on top of the detector pixels 21 or the collimator filter 10 may comprise apertures for passing the light Ld of the display pixels 41 through. In this way the adjacent display pixels 41 may be free to emit their light Ld to reach the display screen 43 unobstructed.

In some embodiments, as shown in FIGs 3A and 3B, the detector (with or without display pixels), may comprise a backlight 42. For example, the backlight 42 is disposed behind the detector pixels 21 and/or display pixels 41. In a preferred embodiment, the backlight 42 is configured to emit a source light Ls at a wavelength outside the visible spectrum, e.g. (near) infrared light, detectable by the detector pixels 21. This may have an advantage that a user is not bothered by the light for illuminating and imaging the object. The source Ls emitted from the backlight may pass through the grid of pixels. Optionally, one or more wavelength filters (not shown) may be disposed between the illuminated object F and the detector pixels 21 (but not the display pixels) so that other wavelengths except that of the source light Ls are filtered out and the detector pixels 21 exclusively receive the intended source light, e.g. instead of light from the display pixels 41. Alternatively, or additionally, to using a dedicated backlight 42 to illuminate the object F, the object may also be illuminated by the display pixels 41 themselves. In some embodiments, additional pixels may be included between the display pixels, e.g. emitting infrared, for illuminating the object. Optionally, the image detector or display screen may also comprise a touch interface for detecting the presence of one or more objects, e.g. fingers on the display screen 43. In some embodiments, the imaged detector may itself act as a touch interface. For example, one application can be a mobile device, e.g. smart phone, comprising a display screen with fingerprint detector as described herein.

The present teachings may also be embodied in methods of manufacturing the collimator filter 10 as described herein. In a preferred embodiment, the method comprises growing or otherwise providing the pattern "P" of nanotubes 1 on top of a substrate in the principal transmission direction "Z". For example, Joshi et al [J. Mater. Chem., 2010, 20, 1717-1721] describe the patterned growth of ultra long carbon nanotubes. For example, Hasegawa et al. [arXiv:0704.1903 (cond-mat.mtrl-sci)] describe growth window and possible mechanism of millimeter-thick single-walled carbon nanotube forests. For example, US 9.221,684 B2 describe hierarchical carbon nano and micro structures.

In one embodiment, the substrate is provided with a seed or catalyst layer according to the pattern "P" and the nanotubes 1 are selectively grown on the said layer. In another or further embodiment, the growth is effected by a mask pattern. In some embodiments, a seed or mask pattern is provided using lithography.

In a preferred embodiment, the method comprises encasing the nanotubes 1 in a transparent matrix 2. For example, the filter structure is encased by applying a liquid precursor which is solidified. For example, the liquid precursor may flow into the apertures and/or cover at least one surface of the filter structure. In some embodiments, the substrate is removed after encasing. Alternatively, the substrate can remain. For example, the nanotubes can be grown on a transparent substrate. For example, the nanotubes can be grown directly onto one of the transparent layers in front of a photo detector. Alternatively, or in addition, a photoactive part of the photodetector may itself act as the substrate. For example, the nanotubes can be grown directly onto the photodetector, e.g. one or more pixels, to form an integrated collimated light detector.

FIGs 4A-4D show images of resulting filter structures at different magnifications. FIG 4A shows a perspective zoomed electron microscope image where the individual CNTs may still be distinguished with example measurements of cells "E", walls "W", and apertures "A". FIG 3B shows a more zoomed out image of a side view illustrating an example height of the walls "W". FIG 4C is similar to FIG 4A but further zoomed out illustrating the larger pattern "P" of repeated cells "E". FIG 3D shows a regular microscope image top view of the collimator filter 10 with the lighter spots illustrating light Lo passing through the collimator filter 10.

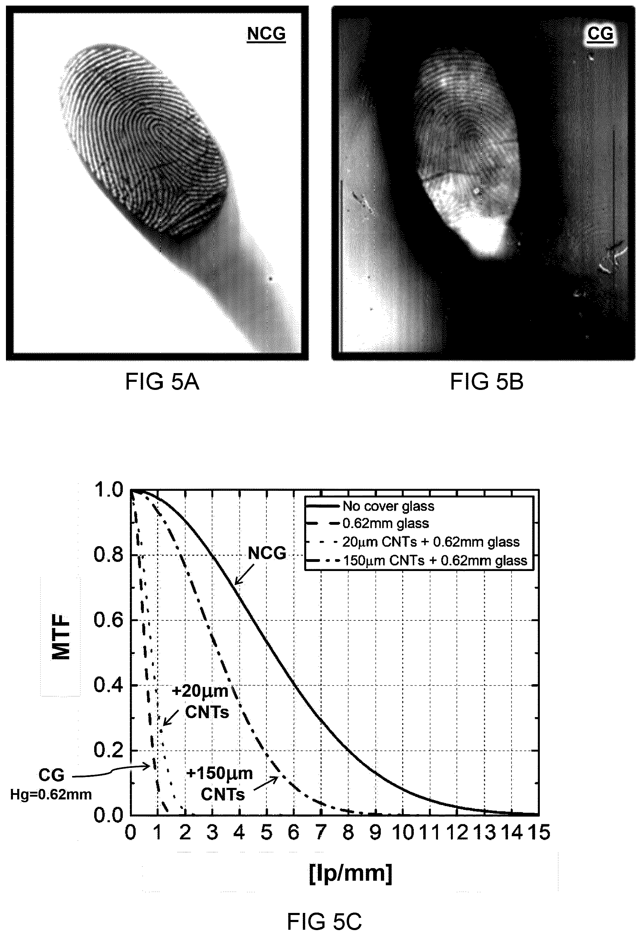

FIGs 5A and 5B illustrate images of a finger print without cover glass (NCG) and with cover glass (CG), respectively. FIG 5C illustrates a comparison of measurements in different situations. Specifically, the figure shows measurement graphs of the Modulation Transfer Function (MTF) against the lateral resolution in line pairs per millimeter (lp/mm). In the situation of no cover glass (NCG), the MTF is best, e.g. providing almost 99% MTF at 1 lp/mm. Introducing 0.6 mm of cover glass (CG) significantly deteriorates the situation to about 10% MTF at 1 lp/mm. However including carbon nanotubes (+CNTs) greatly improves the situation yielding about 30% MTF at 1 lp/mm for a CNT thickness of only 20 µm and more than 90% MTF at 1 lp/mm for a CNT thickness of 150 µm.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A collimator filter (10) comprising
- an entry surface (11) for receiving incident light (Li,Li') at different angles of incidence (θi,θi') with respect to a principal transmission direction (Z) of the collimator filter (10);
- an exit surface (12) at an opposite side of the collimator filter (10) with respect to the entry surface (11) for allowing output light (Lo) to exit from the collimator filter (10); and
- a filter structure between the entry surface (11) and the exit surface (12) for transmitting at least part of the incident light (Li) having angles of incidence (θi) below a threshold angle (θmax) with respect to the principal transmission direction (Z) as the output light (Lo), and blocking the incident light (Li') having angles of incidence (θi') above the threshold angle (θmax) from passing the filter structure;
**wherein** the filter structure comprises a patterned array of carbon nanotubes (1), wherein the nanotubes (1) are aligned extending in the principal transmission direction (Z) between the entry surface (11) and the exit surface (12), wherein the nanotubes (1) are arranged to form a two dimensional pattern (P) transverse to the principal transmission direction (Z), wherein open areas of the pattern (P) without nanotubes (1) form micro-apertures (A) between the nanotubes (1) for the transmitting of the output light (Lo) through the filter structure.

2. The collimator filter (10) according to claim 1, wherein the filter structure is encased in a transparent matrix (2) to fixate the nanotubes (1).

3. The collimator filter (10) according to claim 2, wherein the micro-apertures (A) are at least partially filled by material (2a) of the transparent matrix (2).

4. The collimator filter (10) according to claim 2 or 3, wherein the transparent matrix (2) forms a optically flat cover layer (2a) to cover the entry surface (11).

5. The collimator filter (10) according to any of the preceding claims, wherein the micro-apertures (A) have a cross-section diameter (Da) between one and ten micrometer, wherein the micro-apertures (A) have an aperture height (Ha) that is at least fifty times the aperture diameter (Da).

6. The collimator filter (10) according to any of the preceding claims, wherein the filter structure is formed as a sheet with a thickness of less than half a millimeter.

7. The collimator filter (10) according to any of the preceding claims, wherein the nanotubes (1) form a pattern of interconnected walls (W), wherein the micro-apertures (A) are each surrounded by respective parts of the walls (W), wherein the walls (W) have a thickness (Dw) between half a micrometer and two micrometer, wherein the wall thickness (Dw) is less than the aperture diameter (Da), by at least a factor three, wherein a total surface area of the filter structure covered by the micro-apertures (A) is at least forty percent.

8. The collimator filter (10) according to any of the preceding claims, wherein the nanotubes (1) form a pattern of interconnected walls (W) enclosing the micro-apertures (A), wherein a top of the walls (W) is covered by a reflective layer (3) while the micro-apertures (A) are free of the reflective layer (3) to allow the nanotubes (1) to absorb light at angles of incidence (θi') above the threshold angle (θmax) impinging the walls inside the micro-apertures (A).

9. The collimator filter (10) according to any of the preceding claims, wherein the nanotubes (1) are arranged in walls (W) to form a pattern of cells (E) arranged in a hexagonal pattern, wherein the micro-apertures (A) formed inside respective cells (E) are circular

10. An image detector comprising
- a photodetector (20) comprising an array of light sensitive detector pixels (21) for detecting light (Lo) to form an image of a nearby object (F);
- a transparent cover plate (30) with a thickness (Hg); and
- the collimator filter (10) according to any of the preceding claims, wherein the collimator filter (10) is disposed between the transparent cover plate (30) and the photodetector (20) for only passing part of the incident light (Li) from the object (F) which is received at or near a normal direction (N) of the entry surface (11) of the collimator filter (10) to improve image resolution (ΔX) of the imaged object (F) on the detector pixels (21).

11. The image detector according to claim 10, wherein each of the detector pixels (21) is covered by a plurality of micro-apertures (A).

12. A fingerprint detector comprising
- the image detector of claim 10 or 11, wherein the object (F) to be imaged is a finger pressed against the transparent cover plate (30); and
- image processing circuitry to receive an image of a fingerprint of the finger from the image detector and process the image to recognize the fingerprint by comparing to a reference fingerprint.

13. A display device comprising
- the fingerprint detector of claim 12, for detecting a finger pressed against a display screen (43) of the display device; and
- display pixels (41) configured to emit light (Ld) to display an image on the display screen (43), wherein the display pixels (41) are disposed in line between the detector pixels (21), wherein the collimator filter (10) is localized to exclusively cover the detector pixels (21) keeping the display pixels (41) free to emit their light (Ld) to the display screen (43) unobstructed by the collimator filter (10).

14. A method of manufacturing the collimator filter (10) according to any of the preceding claims comprising
- growing the pattern (P) of nanotubes (1) on top of a substrate in the principal transmission direction (Z); and
- encasing the nanotubes (1) in a transparent matrix (2).

15. The method according to claim 14, wherein the encased nanotubes are peeled from the substrate, wherein the transparent matrix (2) comprises a flexible material to facilitate the peeling.
